Europäisches Patentamt

European Patent Office

Office européen des brevets

(19)

(11) Publication number : **0 494 548 A1**

# (12) EUROPEAN PATENT APPLICATION

(21) Application number : **91312113.3**

(22) Date of filing : **31.12.91**

(51) Int. Cl.⁵ : **B32B 17/10**

(30) Priority : **31.12.90 GB 9028239**

(43) Date of publication of application :
**15.07.92 Bulletin 92/29**

(84) Designated Contracting States :
**BE DE FR GB**

(71) Applicant : **RANKINS ( GLASS) CO. LTD.**
**The London Glass Centre, 24-34 Pearson**
**Street**
**London E2 8JD (GB)**

(72) Inventor : **Rankin, Clifford Ernest "Rankins**
**(Glass) Co Ltd**
**The London Glass Centre"24-34 Person Street**
**London B2 8JD (GB)**

(74) Representative : **Jump, Timothy John Simon et**
**al**
**VENNER, SHIPLEY & CO. 368 City Road**
**London EC1V 2QA (GB)**

(54) **Laminated glazing material.**

(57) A laminated glazing material comprising two layers of a clear resin material (5), sandwiched between outer layers of a non-reflective glass (1) and inner layers of glass (3), which in turn sandwich a central layer of a clear intumescent material (4), is described. The material is impact resistant, non-reflective and is able to provide a barrier against the spread of fire.

EP 0 494 548 A1

The present invention relates to a laminated glazing arterial. In particular, the present invention relates to a laminated glazing material, which includes a layer of clear intumescent material.

When conventional glass panes in windows or glazed panels are exposed to the heat of a fire, the glass will usually be caused to shatter or, if the heat is sufficiently intense, to melt. Thus, glazed partitions, or windows can provide a ready route for the spread of fire. A pane of conventional laminated glass, which comprises a layer of thermoplastic resin material sandwiched between two layers of glass, offers little advantage, in this respect, over a single sheet of glass, because the thermoplastic resin arterial is rapidly destroyed in a fire.

Laminated glazing materials which comprise at least two layers of glass sandwiching a layer of a clear intumescent arterial have been developed, are now commercially available and are employed in areas where there is a significant risk of fire. When a panel or pane of such arterial is exposed to a fire, which causes one or both of the glass layers to crack or shatter, the intumescent arterial will expand to insulate any remaining intact glass layer from the heat of the fire and to plug any cracks or holes, which may have formed in the panel. The intumescent material may be selected so that it begins to expand at a temperature below that required to crack, or melt the glass layers. When a glazing material having a layer of such an intumescent material is heated in a fire, the material will expand and cause at least one of the layers of glass to fracture. Once expanded, the intumescent arterial will form a substantially solid and insulating plug in place of the original glazed panel, which will act as a barrier to the spread of fire. Such laminated glazing materials are available from Glaverbel B.V. in Belgium, under the Trade Mark PYROBEL.

It has become standard practice for "non-reflective" glass to be used in the windows of airport control towers, television studio control rooms and in other such locations where clear visibility is of paramount importance. In this specification, the term "non-reflective" is used to describe a material having a surface which causes less incident visible light to be reflected than would be reflected at the surface of conventional float glass. Conventional float glass can be provided with such non-reflective properties by coating its surface with a material which reduces the degree to which the glass will reflect incident light, at its boundary with a surrounding medium. Such coatings are well known, particularly in the optical industries where they are employed to reduce the effect of lens flare, and usually comprise metal oxides, such as zinc oxide.

However, all known forms of non-reflective glass are no more resistant to the effects of fire than conventional float glass. Moreover, laminated glazing materials, which incorporate a layer of clear intumescent material, cannot easily be provided with a non-reflective coating, since the conditions required to form the latter can damage the intumescent material; possibly by causing it to undergo some degree of expansion and loss of its light transmitting capacity.

According to the present invention, there is provided a glazing material comprising a laminate of at least a first and a second layer of glass sandwiching a layer of clear intumescent material, characterised in that at least one surface of the glazing material is non-reflective and is provided by the inclusion of a further layer of material in the laminate. Advantageously, glazing material in accordance with the present invention can be employed where non-reflective properties are required and where there is a risk of fire, such as in a television studio.

In an embodiment, a second layer of non-reflective surface providing material is included in the laminate to provide a second non-reflective surface thereto. In a preferred embodiment, said non-reflective surface providing layers of material are outermost in the laminate and, preferably formed from a suitably coated glass, such as that available from Schott Glaswerke, of Mainz, Germany, under the Trade Mark AMIRAN.

In its preferred forms, the laminated glazing material of the present invention may be manufactured from commercially available materials, using conventional laminating techniques employed in the glass industry. Special precautions or techniques, such as would be required in order to provide a conventional non-reflective surface directly onto one of the layers of glass sandwiching the layer of intumescent material, are not required.

In a preferred embodiment, a layer or layers of a clear resin material is located between the layer or layers of non-reflective glass and the first or the first and second layer or layers of glass. Preferably, the resin forms an adhesive like bond to adjacent layers of glass, is resiliently flexible and, most preferably, is a cured polyester resin. The preferred polyester resins are cured from liquid resins, available from British Industrial Products Ltd. under the Trade Mark UNILAM, which include a polyester formed from the polycondensation of a polyhydric alcohol with an unsaturated or a saturated dicarboxylic acid or anhydride, dissolved in a monomer such as styrene.

An advantage of such an embodiment of the invention is that it is not only both non-reflective and fire resistant, but it also enjoys the impact resistant qualities associated with laminated safety glasses. The intumescent layer, surprisingly, is able to effectively respond to the heat of a fire, despite being clad with so many additional layers of material, and has the strength, in expanded form, to hold the additional broken glass and distorted or burning resin which adheres to it.

The intumescent material can be any such arterial, so long as it is substantially clear and behaves in the previously described manner.

A specific embodiment of the present invention will now be described by way of example only and with reference to the accompanying Figure.

The Figure is a cross-section through a sheet of laminated glazing material in accordance with the present invention.

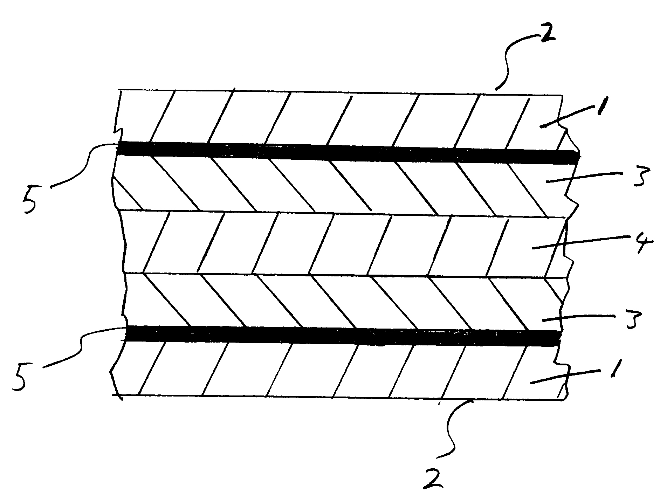

The glazing material shown in Figure 1 comprises two outer layers of float glass 1, which each have outwardly facing non-reflective surfaces 2, sandwiching two inner layers of float glass 3 which, in turn, sandwich a single layer of a clear intumescent material 4. The layer of intumescent material 4 binds the two inner layers of float glass 3 together and the outer layers of float glass 1 are bound to the inner layers of float glass 3 by thinner layers 5 of a cured polyester resin (available from British Industrial Product Ltd., under the Trade Mark UNILAM).

The sheet of material illustrated in the Figure is manufactured by sandwiching a sheet of PYROBEL glazing arterial (available from Glaverbel BV) between two sheets of non-reflective float glass (available as AMIRAN from Schott Glaswerke). The PYROBEL material provides the inner layers of float glass 3 and the layer of intumescent material 4. In manufacture, the non-reflective glass is held spaced from the PYROBEL material and the uncured resin is poured into the resulting gap and allowed to cure under the influence of a conventional catalyst and accelerator mix. In a typical finished product, the layers of glass 1 and 3 and intumescent material 4 are 4mm thick and the layers of cured polyester resin are between 1.6 and 0.8mm thick.

## Claims

1. A glazing material comprising a laminate of at least a first and a second layer of glass (3) sandwiching a layer of clear intumescent material (4), characterised in that at least one surface (2) of the glazing material is non-reflective and is provided by the inclusion of a further layer of material (1) in the laminate.

2. A glazing material as claimed in claim 1, characterised in that a second layer of non-reflective surface providing material (1) is included in the laminate.

3. A glazing material as claimed in claim 1l or claim 2, characterised in that one or both outermost layers (1) in the laminate comprises or comprise a layer of non-reflective surface providing material (1).

4. A glazing material as claimed in any one of claims 1-3, characterised in that the laminate further comprises a layer or layers of a clear resin material (5), located between the first or the first and the second layer or layers of glass (3) and the layer or layers of non-reflective surface providing material (1).

5. A glazing material as claimed in claim 4, characterised in that the resin material (5) forms an adhesive like bond to the adjacent layers (1 and 3) in the laminate.

6. A glazing material as claimed in claim 4 or claim 5, characterised in that the resin material (5) is resiliently flexible.

7. A glazing material as claimed in any of claims 1-6, characterised in that said non-reflective surface providing material (1) is a suitably coated glass.

8. A glazing material as claimed in claim 6, characterised in that the resin material (5) is a cured polyester resin.

**European Patent Office**

# EUROPEAN SEARCH REPORT

Application Number

EP    91 31 2113

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 150 463 (GLAVERBEL)<br>* the whole document *<br>--- | 1,3 | B32B17/10 |
| X | US-A-4 071 649 (FRANCIS JACQUEMIN ET AL)<br>*column 14; example 13; figure 5*<br>----- | 1,3-6 | |
| | | | **TECHNICAL FIELDS SEARCHED (Int. Cl.5)**<br><br>B32B |

The present search report has been drawn up for all claims

| Place of search | Date of completion of the search | Examiner |
|---|---|---|
| THE HAGUE | 14 MAY 1992 | VAN BELLEGHEM W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)